# FASCICULE DE BREVET EUROPEEN

(11) **EP 3 626 572 B1**
(45) Date de publication et mention de la délivrance du brevet: **02.12.2020**
(21) Numéro de dépôt: 19197445.0
(22) Date de dépôt: 16.09.2019
(51) Int. Cl.: B61D 25/00, B60J 3/04

(54) **VOITURE DE VÉHICULE DE TRANSPORT PUBLIC À CLIMATISATION PERFECTIONNÉE**
WAGGON EINES ÖFFENTLICHEN TRANSPORTFAHRZEUGS MIT VERBESSERTER KLIMAANLAGE
CAR FOR PUBLIC TRANSPORT VEHICLE WITH IMPROVED AIR-CONDITIONING SYSTEM

(30) Priorité: 18.09.2018 FR 1858436
(43) Date de publication de la demande: 25.03.2020
(73) Titulaire: ALSTOM Transport Technologies, 93400 Saint-Ouen (FR)
(72) Inventeur: PAILLER, Christophe, 17180 Perigny (FR); SIMONI, Bastian, 94130 Nogent-sur-Marne (FR)
(74) Mandataire: Lavoix

(56) Documents cités:
- EP-A1- 2 764 998
- WO-A1-92/04522
- DE-A1- 19 911 540
- FR-A1- 2 935 110

## Description

La présente invention concerne une voiture de véhicule de transport public à climatisation perfectionnée.

Dans la présente description, on appellera « climatisation » toutes les dispositions prises pour réguler la température dans la voiture de véhicule de transport public, pour assurer un confort satisfaisant pour les passagers.

Une telle voiture comporte par exemple un dispositif de climatisation, propre à réduire la température dans la voiture lorsque la température extérieure est élevée, notamment en été, et/ou à augmenter la température dans la voiture lorsque la température extérieure est basse, notamment en hiver.

Le document EP 2 764 998 A1 décrit une fenêtre pour une voiture de véhicule de transport public, au moins une partie de la fenêtre étant adjacente à un siège propre à accueillir un passager, et la fenêtre comprenant un vitrage à opacité variable, et la fenêtre comportant des moyens de commande de l'opacité du vitrage.

La présente invention a notamment pour but d'améliorer la climatisation dans une voiture de véhicule de transport public.

A cet effet, l'invention a notamment pour objet une voiture de véhicule de transport public, comportant au moins une paroi latérale comprenant au moins une fenêtre, au moins une partie de la fenêtre étant adjacente à un siège propre à accueillir un passager, et la fenêtre comprenant un vitrage à opacité variable, et la voiture comportant des moyens de commande de l'opacité du vitrage, caractérisée en ce qu'elle comporte :
- au moins un capteur de présence agencé pour détecter la présence d'un passager sur le siège, et
- des moyens de modification de l'opacité du vitrage, configurés pour modifier l'opacité du vitrage de la partie de fenêtre adjacente au siège, vers une configuration prédéfinie, lorsqu'aucune présence n'est détectée sur le siège pendant une durée prédéfinie, de manière prioritaire sur les moyens de commande.

L'invention prévoit de modifier l'opacité du vitrage lorsque le siège adjacent est inoccupé, et ce de manière prioritaire sur les moyens de commande de l'opacité lorsque le siège est inoccupé.

Ainsi, dès lors que le siège est inoccupé, l'opacité du vitrage est modifiée vers une configuration prédéfinie pour optimiser la climatisation.

Par exemple, en été, la configuration prédéfinie correspond à une opacité maximale, de sorte que les rayons solaires soient bloqués par les vitrages adjacents à des sièges inoccupés, et ne s'opposent donc pas au refroidissement de l'intérieur de la voiture.

En revanche, en hiver, la configuration prédéfinie correspond au contraire à une opacité minimale, de sorte que les rayons solaires passent au travers des vitrages adjacents à des sièges inoccupés, aidant à réchauffer l'intérieur de la voiture.

Une voiture selon l'invention peut comporter en outre l'une ou plusieurs des caractéristiques suivantes, prises seules ou selon toutes combinaisons techniquement envisageables.
- La voiture comporte au moins un capteur de luminosité extérieure, agencé pour mesurer l'ensoleillement sur la fenêtre, les moyens de modification étant configurés pour ne modifier l'opacité du vitrage que lorsque la luminosité extérieure mesurée dépasse un seuil prédéfini.
- Les moyens de modification présentent un premier mode de fonctionnement, dans lequel la configuration prédéfinie de l'opacité du vitrage est une configuration d'opacité maximale.
- Les moyens de modification présentent un second mode de fonctionnement, dans lequel la configuration prédéfinie de l'opacité du vitrage est une configuration d'opacité minimale.
- Les moyens de commande sont prioritaires sur les moyens de modification lorsque le capteur de présence détecte un passager sur le siège.
- Le vitrage comporte une première partie adjacente à un premier siège et une seconde partie adjacente à un second siège, les première et seconde parties étant séparées par un plan vertical, l'opacité du vitrage dans la première partie étant indépendante de l'opacité du vitrage dans la seconde partie.

L'invention concerne également un procédé de modification de l'opacité d'un vitrage d'une fenêtre d'une voiture telle que définie précédemment, caractérisé en ce qu'il comporte :
- la détection de la présence ou de l'absence de passager sur le siège,
- si le siège est inoccupé pendant la durée prédéfinie, la modification de l'opacité du vitrage de la partie de fenêtre adjacente au siège, vers la configuration prédéfinie, de manière prioritaire sur les moyens de commande.

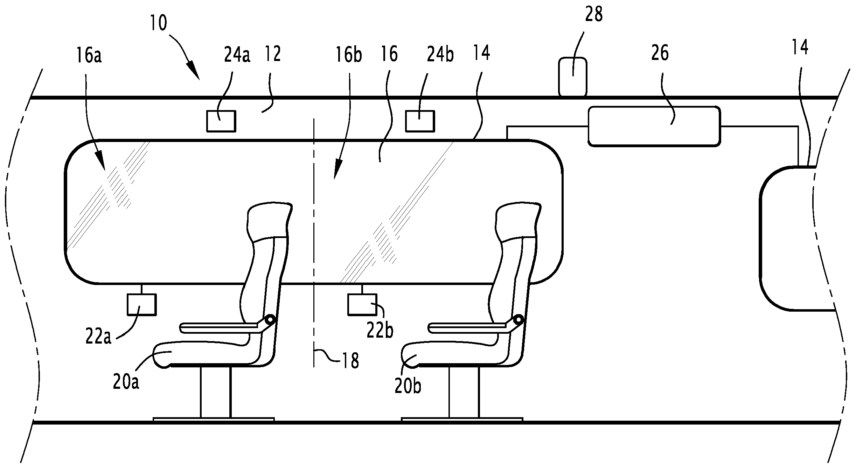

L'invention sera mieux comprise à la lecture de la description qui va suivre, donnée uniquement à titre d'exemple et faite en se référant à la figure annexée, représentant schématiquement une voiture selon un exemple de mode de réalisation de l'invention.

On a représenté partiellement, sur la figure, une voiture 10 de véhicule de transport public. Par exemple, le véhicule de transport public est un véhicule ferroviaire, mais il pourrait en variante être un véhicule routier ou autre.

La voiture 10 comporte deux parois latérales 12 en vis-à-vis l'une de l'autre, dont une seule est représentée sur la figure.

La paroi latérale 12 comporte au moins une fenêtre 14, généralement une pluralité de fenêtres 14. Toutes les fenêtres 14 sont identiques, si bien que seule l'une d'entre elles sera décrite en détail.

La fenêtre 14 est pourvue d'un vitrage 16 à opacité variable. Par exemple, le vitrage 16 comporte une pluralité de zones dont les opacités peuvent être réglées indépendamment les unes des autres.

De manière connue en soi, le vitrage 16 comporte des particules suspendues d'opacification, l'opacité du vitrage 16 dépendant de l'orientation de ces particules d'opacification, cette orientation variant en fonction d'un courant électrique fourni à ce vitrage 16. Plus ce courant électrique est fort, plus l'opacité du vitrage est faible.

Par exemple, le vitrage 16 comporte deux parties, dites première 16a et seconde 16b parties, séparées par un plan vertical 18. Par exemple, le plan vertical 18 est un plan médian, séparant le vitrage 16 en deux parties de surfaces sensiblement identiques.

L'opacité de la première partie 16a est indépendante de l'opacité de la seconde partie 16b. En outre, chaque partie 16a, 16b peut comporter plusieurs zones d'opacités réglables indépendamment les unes des autres.

La première partie 16a est adjacente à un premier siège 20a, et la seconde partie 16b est adjacente à un second siège 20b. Chaque siège 20a, 20b est destiné à accueillir au moins un passager. En effet, dans la présente description, on appelle « siège » un ensemble d'assises et de dossiers, d'une place, de deux places ou plus.

La voiture 10 comporte des moyens 22a, 22b de commande de l'opacité du vitrage 16.

Plus particulièrement, les moyens de commande comportent un premier organe 22a de commande de l'opacité de la première partie 16a du vitrage, et un second organe 22b de commande de l'opacité de la seconde partie 16b du vitrage.

Le premier organe de commande 22a est agencé à proximité du premier siège 20a, de manière à être accessible à un passager occupant ce premier siège 20a. De même, le second organe de commande 22b est agencé à proximité du second siège 20b, de manière à être accessible à un passager occupant ce second siège 20b.

La voiture 10 comporte, pour chaque siège, un capteur de présence agencé pour détecter la présence d'un passager sur ce siège. On a donc représenté un premier capteur de présence 24a agencé pour détecter la présence d'un passager sur le premier siège 20a, et un second capteur de présence 24b agencé pour détecter la présence d'un passager sur le second siège 20b. Sur la figure, les capteurs de présence 24a, 24b sont représentés au-dessus des sièges correspondants, mais chaque capteur de présence pourrait en variante être intégré dans le siège correspondant, notamment dans l'assise 20a, 20b.

La voiture 10 selon l'invention comporte par ailleurs des moyens 26 de modification de l'opacité du vitrage 16, configurés pour modifier l'opacité du vitrage de la partie 16a, 16b adjacente au siège 20a, 20b, vers une configuration prédéfinie, lorsqu'aucune présence n'est détectée sur le siège 20a, 20b pendant une durée prédéfinie, de manière prioritaire sur les moyens de commande 22a, 22b.

Ainsi, dès qu'un siège est inoccupé pendant une durée prédéfinie, l'opacité du vitrage est modifiée vers la configuration prédéfinie, quelle que soit la position des moyens de commande correspondants.

La durée prédéfinie est choisie de manière à ne pas modifier l'opacité lorsque le passager ne s'absente que momentanément. Par exemple, on choisira une durée prédéfinie égale à 5 minutes.

La configuration prédéfinie de l'opacité dépendent de préférence d'un mode de fonctionnement des moyens de modification 26.

Par exemple, les moyens de modification 26 présentent un premier mode de fonctionnement, dans lequel la configuration prédéfinie de l'opacité du vitrage est une configuration d'opacité maximale. Ce premier mode de fonctionnement est par exemple utilisé en été, lorsque l'on souhaite empêcher les rayons du soleil de passer au travers des vitrages adjacents à des sièges inoccupés.

L'opacité choisie pour ce vitrage n'impacte personne dès lors que le siège est inoccupé. En revanche, l'opacité maximale empêche les rayons du soleil de venir chauffer l'intérieur de la voiture, si bien qu'ils ne s'opposent pas au refroidissement de la voiture par un dispositif de climatisation.

Avantageusement, les moyens de modification 26 présentent un second mode de fonctionnement, dans lequel la configuration prédéfinie de l'opacité du vitrage est une configuration d'opacité minimale. Ce second mode de fonctionnement est par exemple utilisé en hiver, lorsque l'on souhaite que les rayons du soleil passent au travers des vitrages adjacents à des sièges inoccupés.

L'opacité choisie pour ce vitrage n'impacte personne dès lors que le siège est inoccupé. En revanche, l'opacité minimale permet aux rayons du soleil de venir chauffer l'intérieur de la voiture, si bien qu'ils aident au chauffage de la voiture par un dispositif de climatisation.

On notera que les moyens de modification 26 peuvent être liés au dispositif de climatisation, pour passer automatiquement dans le premier mode de fonctionnement lorsque le dispositif de climatisation est en mode de refroidissement, et dans le second mode de fonctionnement lorsque le dispositif de climatisation est en mode de chauffage.

Avantageusement, la voiture 10 comporte au moins un capteur de luminosité extérieure 28, agencé pour mesurer l'ensoleillement sur la fenêtre 14, les moyens de modification 26 étant configurés pour ne modifier l'opacité du vitrage 16 que lorsque la luminosité extérieure mesurée dépasse un seuil prédéfini.

De préférence, la voiture 10 comporte un capteur de luminosité extérieure 28 sur chaque paroi latérale 12.

Ceci permet de ne modifier l'opacité du vitrage 16 que lorsque cela est nécessaire. En effet, si les rayons solaires ne sont pas considérés comme suffisants pour influer sur la température dans la voiture, alors il n'est pas nécessaire de modifier l'opacité du vitrage 16.

Comme indiqué précédemment, les moyens de modification 26 sont prioritaires sur les moyens de commande 22a, 22b lorsque le siège 20a, 20b correspondant est inoccupé, de sorte que la modification 26 soit effectuée dès que cela est nécessaire et que ce siège 20a, 20b est inoccupé.

En revanche, les moyens de commande 22a, 22b sont prioritaires sur les moyens de modification 26 lorsque le siège 20a, 20b est occupé. Ainsi, les passagers choisissent l'opacité du vitrage 16 lorsqu'ils sont sur le siège correspondant.

On notera que l'invention n'est pas limitée au mode de réalisation précédemment décrit, mais pourrait présenter diverses variantes complémentaires.

## Revendications

1. Voiture (10) de véhicule de transport public, comportant au moins une paroi latérale (12) comprenant au moins une fenêtre (14), au moins une partie de la fenêtre (14) étant adjacente à un siège (20a, 20b) propre à accueillir un passager, et la fenêtre (14) comprenant un vitrage (16) à opacité variable, et la voiture comportant des moyens (22a, 22b) de commande de l'opacité du vitrage (16), **caractérisée en ce qu'**elle comporte :
- au moins un capteur de présence (24a, 24b) agencé pour détecter la présence d'un passager sur le siège (20a, 20b), et
- des moyens (26) de modification de l'opacité du vitrage (16), configurés pour modifier l'opacité du vitrage (16) de la partie de fenêtre adjacente au siège (20a, 20b), vers une configuration prédéfinie, lorsqu'aucune présence n'est détectée sur le siège (20a, 20b) pendant une durée prédéfinie, de manière prioritaire sur les moyens de commande (22a, 22b).

2. Voiture (10) selon la revendication 1, comportant au moins un capteur (28) de luminosité extérieure, agencé pour mesurer l'ensoleillement sur la fenêtre (14), les moyens de modification (26) étant configurés pour ne modifier l'opacité du vitrage (16) que lorsque la luminosité extérieure mesurée dépasse un seuil prédéfini.

3. Voiture (10) selon la revendication 1 ou 2, dans lequel les moyens de modification (26) présentent un premier mode de fonctionnement, dans lequel la configuration prédéfinie de l'opacité du vitrage (16) est une configuration d'opacité maximale.

4. Voiture (10) selon l'une quelconque des revendications précédentes, dans lequel les moyens de modification (26) présentent un second mode de fonctionnement, dans lequel la configuration prédéfinie de l'opacité du vitrage (16) est une configuration d'opacité minimale.

5. Voiture (10) selon l'une quelconque des revendications précédentes, dans laquelle les moyens de commande (22a, 22b) sont prioritaires sur les moyens de modification (26) lorsque le capteur de présence (24a, 24b) détecte un passager sur le siège (20a, 20b).

6. Voiture (10) selon l'une quelconque des revendications précédentes, dans laquelle le vitrage (16) comporte une première partie (16a) adjacente à un premier siège (20a) et une seconde partie (16b) adjacente à un second siège (20b), les première et seconde parties étant séparées par un plan vertical (18), l'opacité du vitrage dans la première partie (16a) étant indépendante de l'opacité du vitrage dans la seconde partie (16b).

7. Procédé de modification de l'opacité d'un vitrage d'une fenêtre d'une voiture selon l'une quelconque des revendications précédentes, **caractérisé en ce qu'**il comporte :
- la détection de la présence ou de l'absence de passager sur le siège (20a, 20b),
- si le siège (20a, 20b) est inoccupé pendant la durée prédéfinie, la modification de l'opacité du vitrage (16) de la partie de fenêtre adjacente au siège (20a, 20b), vers la configuration prédéfinie, de manière prioritaire sur les moyens de commande (22a, 22b).

## Patentansprüche

1. Wagen (10) für ein Fahrzeug für öffentlichen Personenverkehr, welcher mindestens eine Seitenwand (12) aufweist, welche mindestens ein Fenster (14) aufweist, wobei mindestens ein Teil des Fensters (14) benachbart zu einem Sitz (20a, 20b) ist, welcher imstande ist, einen Passagier aufzunehmen, und wobei das Fenster (14) eine Verglasung (16) mit variabler Opazität aufweist, und wobei der Wagen Mittel (22a, 22b) zum Steuern der Opazität der Verglasung (16) aufweist, **dadurch gekennzeichnet, dass** er aufweist:
- mindestens einen Anwesenheitssensor (24a, 24b), welcher eingerichtet ist, um die Anwesenheit eines Passagiers auf dem Sitz (20a, 20b) zu detektieren, und
- Mittel (26) zum Verändern der Opazität der Verglasung (16), welche eingerichtet sind, um die Opazität der Verglasung (16) des Fensterteils, welcher benachbart zu dem Sitz (20a, 20b) ist, in eine vordefinierte Konfiguration zu verändern, wenn für eine vordefinierte Dauer keine Anwesenheit auf dem Sitz (20a, 20b) detektiert wird, auf eine Weise, welche vorrangig vor den Mitteln zum Steuern (22a, 22b) ist.

2. Wagen (10) gemäß Anspruch 1, welcher mindestens einen Sensor (28) für externe Helligkeit aufweist, welcher eingerichtet ist, um die Sonneneinstrahlung auf das Fenster (14) zu messen, wobei die Mittel zum Verändern (26) eingerichtet sind, um die Opazität der Verglasung (16) nur zu verändern, wenn die gemessene externe Helligkeit einen vordefinierten Schwellwert übersteigt.

3. Wagen (10) gemäß Anspruch 1 oder 2, wobei die Mittel zum Verändern (26) einen ersten Arbeitsmodus haben, in welchem die vordefinierte Konfiguration der Opazität der Verglasung (16) eine Konfiguration mit maximaler Opazität ist.

4. Wagen (10) gemäß irgendeinem der vorherigen Ansprüche, wobei die Mittel zum Verändern (26) einen zweiten Arbeitsmodus haben, in welchem die vordefinierte Konfiguration der Opazität der Verglasung (16) eine Konfiguration mit minimaler Opazität ist.

5. Wagen (10) gemäß irgendeinem der vorherigen Ansprüche, wobei die Mittel zum Steuern (22a, 22b) vorrangig vor den Mitteln zum Verändern (26) sind, wenn der Anwesenheitssensor (24a, 24b) einen Passagier auf dem Sitz (20a, 20b) detektiert.

6. Wagen (10) gemäß irgendeinem der vorherigen Ansprüche, wobei die Verglasung (16) einen ersten Teil (16a), welcher zu einem ersten Sitz (20a) benachbart ist, und einen zweiten Teil (16b), welcher zu einem zweiten Sitz (20b) benachbart ist, aufweist, wobei der erste Teil und der zweite Teil mittels einer vertikalen Ebene (18) getrennt sind, wobei die Opazität der Verglasung in dem ersten Teil (16a) unabhängig von der Opazität der Verglasung in dem zweiten Teil (16b) ist.

7. Verfahren zum Verändern der Opazität einer Verglasung eines Fensters eines Wagens gemäß irgendeinem der vorherigen Ansprüche, **dadurch gekennzeichnet, dass** es aufweist:
- Detektieren der Anwesenheit oder der Abwesenheit eines Passagiers auf dem Sitz (20a, 20b),
- falls der Sitz (20a, 20b) für eine vordefinierte Dauer unbesetzt ist, Verändern der Opazität der Verglasung (16) des Fensterteils, welcher benachbart zu dem Sitz (20a, 20b) ist, in eine vordefinierte Konfiguration, auf eine Weise, welche vorrangig vor den Mitteln zum Steuern (22a, 22b) ist.

## Claims

1. Car (10) of a public transport vehicle, having at least one side wall (12) comprising at least one window (14), at least part of the window (14) being adjacent to a seat (20a, 20b) capable of receiving a passenger, and the window (14) comprising glazing (16) of variable opacity, and the car having means (22a, 22b) for controlling the opacity of the glazing (16), **characterised in that** it comprises:
- at least one presence sensor (24a, 24b) arranged to detect the presence of a passenger on the seat (20a, 20b), and
- means (26) for modifying the opacity of the glazing (16), which means are configured to modify the opacity of the glazing (16) of the part of the window that is adjacent to the seat (20a, 20b) to a predefined configuration when a presence is not detected on the seat (20a, 20b) for a predefined period of time, as a priority over the control means (22a, 22b).

2. Car (10) according to claim 1, having at least one outside brightness sensor (28) which is arranged to measure the sunlight on the window (14), the modification means (26) being configured to modify the opacity of the glazing (16) only when the measured outside brightness exceeds a predefined threshold.

3. Car (10) according to claim 1 or 2, wherein the modification means (26) have a first operating mode in which the predefined configuration of the opacity of the glazing (16) is a configuration of maximum opacity.

4. Car (10) according to any one of the preceding claims, wherein the modification means (26) have a second operating mode in which the predefined configuration of the opacity of the glazing (16) is a configuration of minimum opacity.

5. Car (10) according to any one of the preceding claims, wherein the control means (22a, 22b) have priority over the modification means (26) when the presence sensor (24a, 24b) detects a passenger on the seat (20a, 20b).

6. Car (10) according to any one of the preceding claims, wherein the glazing (16) has a first part (16a) adjacent to a first seat (20a) and a second part (16b) adjacent to a second seat (20b), the first and second parts being separated by a vertical plane (18), the opacity of the glazing in the first part (16a) being independent of the opacity of the glazing in the second part (16b).

7. Method for modifying the opacity of the glazing of a window of a car according to any one of the preceding claims, **characterised in that** it comprises:
- detecting the presence or absence of a passenger on the seat (20a, 20b),
- if the seat (20a, 20b) is unoccupied for the predefined period of time, modifying the opacity of the glazing (16) of the part of the window that is adjacent to the seat (20a, 20b) to the predefined configuration, as a priority over the control means (22a, 22b).
